# FASCICULE DE BREVET EUROPEEN

(11) **EP 2 403 050 B1**
(45) Date de publication et mention de la délivrance du brevet: **18.07.2018**
(21) Numéro de dépôt: 11169991.4
(22) Date de dépôt: 15.06.2011
(51) Int. Cl.: H01M 2/10, H01M 10/653, H01M 2/02, H01M 10/0525

(54) **Batterie de générateurs électrochimiques comprenant une mousse comme materiau de remplissage entre générateurs**
Batterie von elektrochemischen Generatoren, die einen Schaumstoff als Füllmaterial zwischen Generatoren umfasst
Battery of electrochemical generators including a foam as a filling material between generators

(30) Priorité: 02.07.2010 FR 1055366
(43) Date de publication de la demande: 04.01.2012
(73) Titulaire: SAFT, 93170 Bagnolet (FR)
(72) Inventeur: Rabaud, Olivier, 33000 Bordeaux (FR); Narbonne, Alexandre, 33000 Bordeaux (FR); Turbe, Benoît, 33800 Bordeaux (FR)
(74) Mandataire: Hirsch & Associés

(56) Documents cités:
- EP-A1- 2 200 110
- WO-A2-2010/040363
- DE-A1-102007 010 751
- DE-A1-102007 063 174
- DE-A1-102007 063 194
- DE-A1-102008 059 956
- DE-A1-102008 059 971
- DE-U1-202010 002 352
- FR-B1- 2 873 495
- US-A- 4 418 127
- US-A1- 2008 090 137

## Description

### DOMAINE TECHNIQUE

Le domaine technique auquel se rapporte l'invention est celui des batteries de générateurs électrochimiques de type lithium-ion. L'invention concerne également la protection des générateurs électrochimiques au lithium contre l'emballement thermique.

### ETAT DE LA TECHNIQUE

Un générateur électrochimique est un dispositif de production d'électricité dans lequel de l'énergie chimique est convertie en énergie électrique. L'énergie chimique est constituée par des composés électrochimiquement actifs déposés sur au moins une face d'électrodes disposées dans le générateur électrochimique. L'énergie électrique est produite par des réactions électrochimiques au cours d'une décharge du générateur électrochimique. Les électrodes, disposées dans un conteneur, sont connectées électriquement à des bornes de sortie de courant qui assurent une continuité électrique entre les électrodes et un consommateur électrique auquel le générateur électrochimique est associé. Les bornes de sortie de courant positive et négative peuvent être fixées soit sur les parois de faces opposées du conteneur du générateur électrochimique soit sur la paroi d'une même face du conteneur.

Plusieurs générateurs électrochimiques peuvent être connectés ensemble en série ou en parallèle en fonction de la tension nominale de fonctionnement du consommateur électrique et de la quantité d'énergie qu'il est prévu de fournir à ce consommateur. Les générateurs électrochimiques sont alors placés dans un boîtier commun et l'on désigne généralement l'ensemble du boîtier et de la pluralité de générateurs électrochimiques qu'il renferme par le terme de batterie. Dans un souci de commodité de branchement électrique entre des générateurs électrochimiques placés dans une batterie, les bornes de sortie de courant positive et négative sont souvent fixées sur la paroi d'une même face du conteneur.

Une anomalie dans le fonctionnement de la batterie peut être causée par le dysfonctionnement de l'un des générateurs électrochimiques (court-circuit, surcharge,...) ou par une perturbation extérieure (choc, élévation de la température, etc.) ou encore par une défaillance du système électronique gérant l'état de charge ou d'autres paramètres des générateurs de la batterie.

Par exemple, lorsqu'un générateur électrochimique au lithium est soumis à une surcharge, sa température augmente. L'augmentation de température entraîne une augmentation du courant de charge qui favorise encore l'augmentation de température. Si le générateur ne dispose pas d'un système de refroidissement suffisant pour évacuer la chaleur émise, celui-ci se retrouve en situation d'emballement thermique : l'augmentation de température est alimentée par le générateur lui-même. L'augmentation incontrôlée de la température du générateur entraîne la génération de gaz et leur expansion à l'intérieur du conteneur du générateur. Cette expansion peut entraîner une augmentation de la pression interne dans le générateur, qui va ouvrir le système de sécurité d'évacuation des gaz. En cas de libération de gaz chauds, dont la température peut atteindre 650°C, ces gaz viennent au contact des autres générateurs de la batterie. Il existe alors un risque pour que le phénomène d'emballement thermique se propage à l'ensemble des générateurs de la batterie, ce qui conduit à la destruction totale de la batterie. Ce risque est particulièrement important dans le cas des générateurs de type lithium-ion.

Le document GB 938359 décrit une batterie de générateurs électrochimiques comprenant un coffre dans lequel est disposée une pluralité de générateurs électrochimiques. Le maintien des générateurs est assuré par l'emploi d'une mousse de polyuréthane qui comble l'espace entre les générateurs électrochimiques.

Le document CN 101106185 décrit une batterie de générateurs électrochimiques lithium-ion dans lequel l'espace entre les générateurs électrochimiques est comblé par un matériau ignifugé. Ce document ne divulgue pas la forme sous laquelle ce matériau est utilisé. En particulier, il ne divulgue pas l'emploi du matériau sous forme de mousse.

Le document JP 04-002043 décrit un générateur électrochimique logé dans un boîtier. Ce générateur est entouré d'une mousse de polyuréthane. La mousse de polyuréthane est utilisée pour empêcher l'humidité de pénétrer dans le générateur. Elle constitue de plus un matériau de remplissage léger.

Le document JP 07-296786 décrit un boîtier renfermant une pluralité de générateurs électrochimiques. Sur ce boîtier est installé un circuit imprimé supportant des bornes de courant, un support de fusible et un support de thermistance. Le boîtier est recouvert de mousse de polyuréthane permettant une meilleure résistance du boîtier contre les chocs.

Le document JP 11-210982 décrit un générateur électrochimique recouvert d'un matériau d'isolation thermique. Ce matériau comprend une couche d'un matériau de renfort tel qu'une feuille de polyvinyle, et une mousse de polyuréthane ignifugé. On évite ainsi une baisse des performances électriques du générateur électrochimique lorsque celui-ci est exposé à des températures allant jusqu'à -30°C.

Le document JP 62-211854 décrit un générateur au lithium de format bouton disposé dans un boîtier. Du polyuréthane est utilisé comme matériau de remplissage entre le générateur et le boîtier afin d'empêcher la pénétration d'humidité dans le générateur et ainsi augmenter la durée de vie du générateur.

Le document JP 2006-324014 décrit un agent de scellement à base de polyuréthane pour un générateur de format parallélépipédique. Cet agent de scellement présente une bonne adhésion au bac du générateur, une bonne résistance à l'électrolyte et une bonne résistance thermique.

Les documents US 3269865 et CA 767207 décrivent un générateur au plomb-acide dans lequel une mousse de polyuréthane est utilisée pour remplir l'espace restant entre le fond du bac du générateur et le faisceau électrochimique. La mousse de polyuréthane rend le générateur résistant aux vibrations.

Le document JP 09-120812 décrit une batterie de générateurs électrochimiques dans lequel les parties supérieures, inférieures et périphériques des générateurs sont recouvertes par une mousse de résine acrylique. Cette mousse permet d'absorber les vibrations et/ou les impacts venant de l'extérieur.

Le document JP 2006-339017 décrit une batterie de générateurs au lithium dans lequel l'espace entre les générateurs est comblé par un matériau plastique ayant une conductivité thermique comprise entre 0,05 W/mK et 3 W/mK. Le matériau plastique permet d'éviter la propagation de l'emballement thermique d'un générateur au générateur voisin. L'utilisation d'un matériau plastique sous forme de mousse n'est pas décrite.

Le document KR 2004-0105338 décrit un générateur au lithium comprenant une réserve d'un agent extincteur permettant d'empêcher la combustion du générateur lorsque la pression à l'intérieur de celui-ci dépasse une valeur nominale.

Le document US 2007/0259258 décrit une batterie de générateurs au lithium dans lequel les générateurs sont empilés les uns sur les autres et le maintien de cet empilement est assuré par un enrobage par une mousse de polyuréthane. Il est également divulgué un mode de réalisation dans lequel des ailettes de refroidissement sont insérées entre deux générateurs.

Le document DE 202005010708 décrit un générateur électrochimique de démarrage au plomb-acide et un générateur électrochimique à usage industriel dont le bac contient une mousse de plastique, tel que le polypropylène ou le polychlorure de vinyle, présentant des pores fermés.

Le document JP 2002-231297 décrit une batterie de générateurs au lithium connectés en parallèle. Les électrodes positives de chacun des générateurs sont connectées ensemble à un collecteur de courant positif. De même, les électrodes négatives de chacun des générateurs sont connectées ensemble à un collecteur de courant négatif. Une mousse plastique est disposée sur le fond du bac de la batterie ainsi que sur la paroi interne du couvercle. Cette disposition de la mousse permet d'éviter une cassure des électrodes.

Le document EP-A-0 676 818 décrit un bac de protection pour générateur électrochimique contre les variations de température. Ce bac contient un second bac en matière isolante fait en mousse de polyuréthane. Ce second bac entoure le générateur électrochimique.

Le document US 5 352 454 décrit un générateur au plomb-acide dans lequel la partie des électrodes non recouverte de matière active et les collecteurs de courant sont noyés dans une mousse de polyuréthane dont les pores sont ouverts. Cette mousse remplit l'espace existant entre la partie supérieure du faisceau électrochimique et le couvercle du générateur. Les pores de la mousse constituent un ensemble de minuscules volumes communiquant entre eux et aptes à contenir les gaz émis en cas de surcharge du générateur électrochimique, tel que l'hydrogène. On réduit ainsi le volume de gaz susceptible de prendre feu et d'entraîner l'explosion du générateur.

Le document US 4 418 127 décrit une batterie comprenant un coffre, des générateurs électrochimiques logés dans le coffre. Une mousse syntactique est disposée autour du conteneur des générateurs. Le coffre de la batterie comprend des évents situés au-dessus des générateurs et destinés à conduire vers un épurateur chimique d'éventuels gaz émis par les générateurs.

Le document WO 2010/040363 décrit une batterie pour véhicule électrique ou hybride, comprenant un coffre logeant plusieurs générateurs électrochimiques de technologie lithium-ion. Une mousse conductrice de la chaleur est disposée entre des générateurs électrochimiques adjacents. Elle permet une dissipation de la chaleur. La mousse peut être à porosité ouverte ou fermée. Les pores fermés de la mousse peuvent contenir un gaz inerte. En cas d'élevation de la température d'un des générateurs électrochimiques et de risque de feu, ce gaz inerte est libéré par les pores de la mousse et a un effet d'extinction du feu.

Le document DE 10 2007 063 174 A1 décrit un coffre logeant une pluralité de générateurs électrochimiques. Ceux-ci sont séparés par une mousse. Les générateurs reposent sur une plaque conductrice de la chaleur. En cas d'augmentation de température, les gaz sont évacués à travers des canaux aménagés à travers l'épaisseur de la plaque conductrice de la chaleur.

Le document CA 1064575 décrit une méthode pour réunir les deux feuillets d'un séparateur de type enveloppe pour générateur électrochimique. Un mousse d'une résine polymérique, telle qu'une polyoléfine, est appliquée sur la tranche des deux feuillets maintenus l'un contre l'autre dans un étau.

On recherche un moyen de lutter contre la propagation d'un phénomène d'emballement thermique d'un générateur aux autres générateurs de la batterie, en particulier dans le cas de générateurs de type lithium-ion.

### RESUME DE L'INVENTION

L'invention a pour objet une batterie (1) de générateurs électrochimiques au lithium comprenant :
- un coffre (2);
- une pluralité de générateurs électrochimiques au lithium (3, 3', 3'') logés dans le coffre, chaque générateur comprenant un conteneur (4); au moins un générateur électrochimique comprenant un conteneur présentant une extrémité obturée par une paroi (14) présentant un amincissement (13, 13', 13") adapté à être déchiré par une surpression à l'intérieur du conteneur, le conteneur étant de forme cylindrique et l'amincissement présentant une forme circulaire
- une mousse ignifugée rigide (10) à porosité fermée constituée d'un matériau isolant électrique remplissant l'espace entre la paroi interne du coffre (11) et la surface libre de la paroi latérale (12) du conteneur de chaque générateur électrochimique, ladite mousse recouvrant la surface libre de la paroi latérale du conteneur de chaque générateur électrochimique sur une longueur représentant au moins 25% de la hauteur du conteneurladite mousse recouvrant l'extrémité obturée sur une surface située à l'extérieur de la forme circulaire, l'amincissement n'étant pas masqué par la mousse, ladite mousse conservant sa porosité fermée ainsi que sa structure rigide et étanche, même en cas de forte augmentation de sa température due à un feu et/ou à des gaz chauds, les gaz chauds s'échappant dans un volume délimité par le fond du conteneur, le fond du coffre et la mousse.

Selon un mode de réalisation, la surface libre de la paroi latérale du conteneur de chaque générateur électrochimique représente la totalité de la surface de la paroi latérale du conteneur.

Selon un mode de réalisation, la surface libre de la paroi latérale du conteneur de chaque générateur électrochimique représente de 25% à 75%, de préférence de 40% à 60%, de préférence encore de 45% à 55% de la surface de la paroi latérale du conteneur.

Selon un mode de réalisation, le coffre comprend une paroi interne épousant la forme de la paroi latérale d'au moins un conteneur, la paroi interne du coffre étant en contact avec ladite paroi latérale dudit conteneur.

Selon un mode de réalisation, la mousse recouvre la surface libre de la paroi latérale (12) du conteneur de chaque générateur sur une longueur représentant au moins 50% de la hauteur du conteneur, de préférence encore, au moins 75% de la hauteur du conteneur et de manière particulièrement préférée toute la hauteur du conteneur.

Selon un mode de réalisation, le conteneur est de forme cylindrique et la mousse recouvre la surface libre de la paroi latérale du conteneur uniquement sur une partie comprise entre la mi-hauteur du conteneur et l'extrémité du conteneur reposant sur le coffre.

Selon un mode de réalisation, le conteneur est de forme cylindrique et la mousse recouvre la surface libre de la paroi latérale du conteneur uniquement sur une partie comprise entre la mi-hauteur du conteneur et l'extrémité du conteneur ne reposant pas sur le coffre.

Selon un mode de réalisation, les générateurs électrochimiques ont une capacité supérieure à 5 Ah.

Selon un mode de réalisation, au moins un générateur est de type lithium-ion.

Selon un mode de réalisation, le matériau isolant électrique est une matière plastique.

Selon un mode de réalisation, la mousse est constituée d'un matériau choisi dans le groupe comprenant le polyuréthane, l'époxy, le polyéthylène, la mélamine, le polyester, le formophénol, le polystyrène, la silicone ou d'un mélange de ceux-ci.

Selon un mode de réalisation, la conductivité thermique de la mousse varie entre 0,02 et 1 W/mK, de préférence entre 0,02 et 0,2 W/mK.

Selon un mode de réalisation, la mousse comprend un composé ignifugeant choisi dans le groupe comprenant le phosphate de trichloropropyle (TCPP), le phosphate de triéthyle (TEP), le phosphate de diéthyle éthyle (DEPP), un polyether polyol bromé, l'anhydride phtallique bromé, le polyphosphate d'ammonium, le phosphore rouge encapsulé, ou un mélange de ceux-ci.

Selon un mode de réalisation, la mousse comprend des charges choisies dans le groupe comprenant l'aluminium trihydraté, le carbonate de calcium, le sulfate de baryum, les fibres de verre, les fibres de carbone, la mélamine, le noir de carbone, l'oxyde de silicium, ou un mélange de ceux-ci.

Selon un mode de réalisation, la densité de la mousse varie entre 5 et 800 kg/m³.

Selon un mode de réalisation, sont disposés dans le coffre (2) de la batterie :
- au moins un flasque (16) comprenant une pluralité d'évidements (76) aptes à s'emboiter avec une portion du conteneur de chacun des générateurs et/ou avec un couvercle (6) obturant le conteneur de chacun des générateurs,
- au moins un joint en élastomère (15) disposé sur ledit flasque, lequel joint comprend une pluralité d'ouvertures (75) en coïncidence avec les évidements du flasque.

De préférence, un premier flasque s'emboite avec une portion du conteneur de chacun des générateurs et un second flasque s'emboite avec le couvercle de chacun des générateurs.

L'invention est plus particulièrement destinée à être appliquée aux batteries de générateurs électrochimiques rechargeables au lithium dont certains composants sont inflammables. L'amélioration de la sécurité de l'utilisateur est un impératif, dans les domaines des véhicules électriques, des télécommunications, des énergies renouvelables.

### BREVE DESCRIPTION DES FIGURES

La Figure 1 est une représentation schématique d'une section longitudinale d'une batterie (1) selon l'invention dans laquelle l'espace entre la paroi interne du coffre (11) et la paroi latérale (12) du conteneur de chaque générateur électrochimique est rempli de mousse plastique rigide ignifugée (10).
La Figure 2 est une représentation schématique d'une vue de la face supérieure de la batterie représentée à la Figure 1.
La Figure 3 est une représentation schématique du mode de réalisation dans lequel la mousse (10) recouvre la paroi latérale (12) du conteneur uniquement sur la partie basse du conteneur.
La Figure 4 est une représentation schématique du mode de réalisation dans lequel la mousse (10) recouvre la paroi latérale (12) du conteneur uniquement sur la partie haute du conteneur.
La Figure 5 représente un générateur électrochimique (3) dont le conteneur (4) présente dans sa partie inférieure un fond comprenant un amincissement (13, 13', 13") servant de dispositif de sécurité en cas de surpression à l'intérieur du conteneur. La mousse (10) recouvre une partie du fond sur une surface située à l'extérieur de la forme circulaire.
La Figure 6 représente une vue de dessus d'une batterie selon un mode de réalisation de l'invention.
La Figure 7 représente une vue éclatée du pack selon un mode de réalisation de l'invention. L'élément 71 est un élément pare feu, par exemple un carton, l'élément 72 est une plaque isolante électrique, l'élément 73 est une entretoise, l'élément 74 est un système de distribution électrique (« busbar »), l'élément 15 est un joint en élastomère comprenant une pluralité d'ouvertures 75 et l'élément 16 est un flasque comprenant une pluralité d'évidements 76.
La Figure 8 représente une vue du dessus d'un joint en élastomère 15 fixé par exemple à l'aide d'un adhésif sur un flasque 16.
La Figure 9 représente une schématisation de la mise en place des différents éléments du pack 91 dans le coffre 2, avant injection de la mousse.
La Figure 10 représente une photographie d'une coupe transversale, selon la longueur des générateurs, d'une portion de batterie sur laquelle sont représentées les zones d'étanchéité au sein de la batterie. La zone 101 représente l'étanchéité entre le coffre et le pack. La zone 102 représente l'étanchéité circulaire (ou annulaire) entre le flasque et le conteneur du générateur électrochimique.

### EXPOSE DETAILLE DES MODES REALISATION

L'invention réside dans la découverte qu'il est possible de lutter contre la propagation du feu aux autres générateurs de la batterie en enrobant la paroi latérale du conteneur de chaque générateur d'une mousse ignifugée à porosité fermée constituée d'un matériau isolant électrique. La mousse utilisée dans l'invention est rigide et ignifugée : elle conserve sa porosité fermée ainsi que sa structure rigide et étanche, même en cas de forte augmentation de sa température due à un feu et/ou à des gaz chauds. Lorsqu'un gaz est émis par l'ouverture du conteneur d'un des générateurs, suite à une anomalie du fonctionnement de la batterie, la mousse plastique joue d'une part le rôle d'isolant thermique empêchant la chaleur émise par le générateur défaillant de se propager aux générateurs voisins. D'autre part, la porosité fermée de la mousse force les gaz chauds émis par le générateur défaillant à s'évacuer hors de la batterie par une ouverture totale ou partielle du coffre sous les générateurs. La porosité fermée de la mousse constitue une structure poreuse étanche permettant d'éviter que les gaz chauds ou les flammes ne circulent entre les générateurs électrochimiques. Cet effet 'barrière' contre les gaz chauds est inattendu avec une mousse alors qu'il découle de la structure pleine d'un matériau en résine, tel que celui utilisé dans le document JP 2006-339017. La sélection et la mise en oeuvre d'une mousse à porosité fermée permettent d'obtenir cet effet de barrière. La mousse permet de lutter contre la propagation de l'emballement thermique aux autres générateurs de la batterie. La réalisation d'une mousse d'un matériau isolant électrique, par exemple en matière plastique, permet d'obtenir un matériau présentant une faible conductivité thermique, ce qui n'est pas possible pour une matière plastique pleine. De plus, la mousse présente en général une densité inférieure à 800 kg/m³, ce qui permet d'obtenir un matériau isolant léger. Selon l'invention, la mousse ignifugée rigide à porosité fermée constituée d'un matériau isolant électrique recouvre la surface libre de la paroi latérale du conteneur de chaque générateur électrochimique. On entend par surface libre, la surface de la paroi latérale qui n'est pas en contact avec une paroi du coffre. Selon l'invention, la mousse recouvre la surface libre de la paroi latérale du conteneur de chaque générateur électrochimique sur une longueur représentant au moins 25% de la hauteur du conteneur.

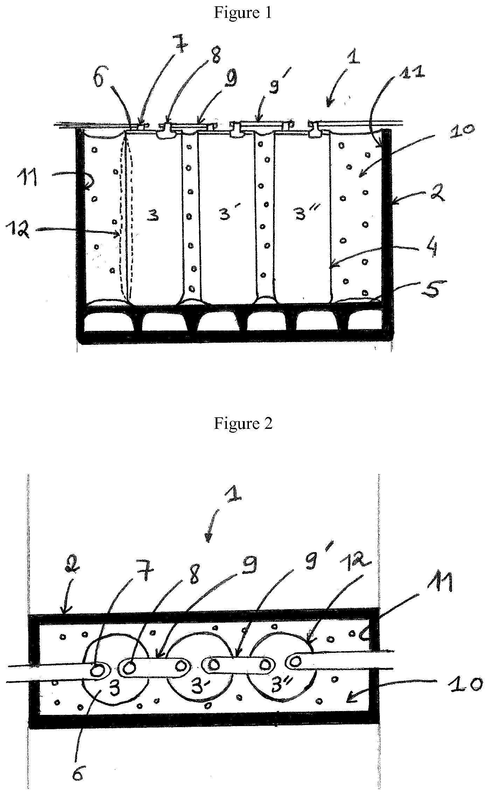

Il va maintenant être décrit, en référence aux Figures 1 et 2, une batterie selon un mode de réalisation de l'invention. La Figure 1 montre une batterie (1) comprenant un coffre (2) destiné à recevoir au moins deux générateurs électrochimiques (3, 3', 3"). Le coffre peut comprendre un couvercle (non représenté).

Chaque générateur comprend un conteneur (4) contenant :
a) un faisceau électrochimique, c'est-à-dire l'ensemble constitué par l'alternance d'électrodes positives et négatives séparées par un séparateur ;
b) un électrolyte liquide.

Le conteneur (4) est de préférence de forme cylindrique mais d'autres formats peuvent être envisagés tels que le format parallélépipédique (prismatique). Le conteneur présente une paroi à l'une de ses extrémités reposant sur le fond du coffre (5). Le conteneur est obturé à l'extrémité opposée par un couvercle (6) supportant les bornes de sortie de courant (7, 8). L'une des deux bornes (7) peut être fixée sur la paroi externe du couvercle et connectée électriquement à la paroi cylindrique du conteneur. L'autre borne (8) peut être fixée à travers le couvercle et isolée électriquement du couvercle par un joint en matière plastique. La Figure 2 montre que le générateur (3') est connecté aux générateurs voisins (3 et 3") par l'intermédiaire de barrettes métalliques (9, 9') qui relient chaque borne de sortie de courant du générateur à la borne de sortie de courant de polarité opposée du générateur voisin.

Selon l'invention, le conteneur de chaque générateur comporte une paroi latérale (12) dont la surface libre, c'est-à-dire sans contact avec la paroi interne du coffre, est recouverte de mousse plastique ignifugée rigide (10) à porosité fermée. La mousse recouvre la paroi sur une longueur représentant au moins 25% de la hauteur du conteneur. Dans un mode de réalisation préféré, la mousse recouvre la surface libre de la paroi latérale du conteneur sur une longueur représentant au moins 50% de la hauteur du conteneur, de préférence encore, au moins 75% de la hauteur du conteneur, de préférence encore au moins 90% de la surface du conteneur. Dans un mode de réalisation encore plus préféré, représenté à la Figure 1, la mousse plastique recouvre la paroi latérale du conteneur de chaque générateur électrochimique sur toute la hauteur du conteneur. Dans ce cas, tout court-circuit par contact entre deux générateurs est évité. Ce mode de réalisation offre une excellente isolation thermique ainsi qu'un meilleur effet de barrière contre la propagation des gaz chauds vers le(s) générateur(s) voisin(s). La mousse plastique ignifugée remplit aussi l'espace entre la paroi interne du coffre (11) et la paroi latérale (12) du conteneur (4) de chaque générateur électrochimique.

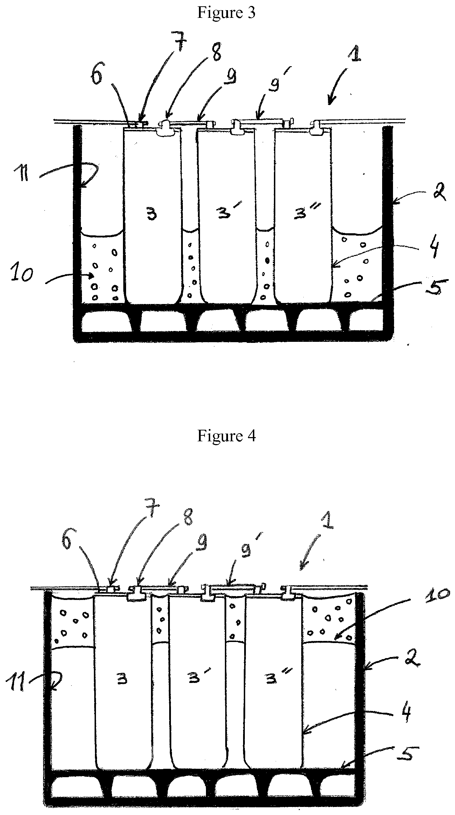

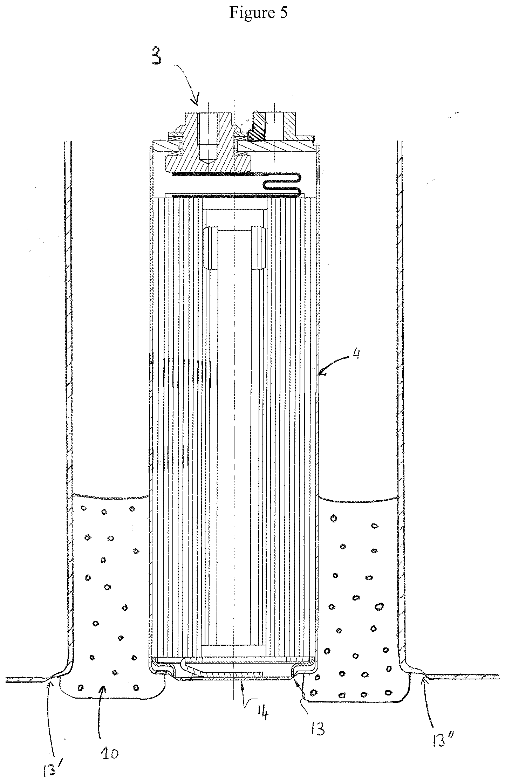

Selon un mode de réalisation préféré illustré Figure 3, la mousse (10) recouvre la paroi latérale (12) du conteneur (4) uniquement sur sa partie basse, c'est-à-dire la partie du conteneur comprise entre la mi-hauteur du conteneur et l'extrémité du conteneur reposant sur le fond (5) du coffre. Cette disposition de la mousse permet d'éviter la propagation des gaz lorsque ceux-ci s'échappent par le fond du conteneur. On préfère en effet que les gaz s'échappent par le fond du conteneur. Pour forcer l'évacuation des gaz par le fond du conteneur, on pratique au cours de la fabrication du générateur, un amincissement dans la paroi du fond du conteneur. Un générateur comprenant un tel amincissement est représenté à la Figure 5. Cet amincissement (13, 13', 13'') constitue une zone de fragilisation de la paroi du fond du conteneur (14) qui se déchire en cas de surpression à l'intérieur du conteneur (4) et provoque la libération des gaz présents dans le conteneur. Cet amincissement constitue un dispositif de sécurité permettant d'éviter que la pression interne du conteneur ne dépasse une valeur seuil prédéterminée. Un tel générateur est aussi décrit dans le brevet FR-B-2 873 495.

Le conteneur est de forme cylindrique auquel cas l'amincissement a une forme circulaire dont le diamètre est inférieur au diamètre du conteneur. La mousse recouvre la partie du fond du conteneur située à l'extérieur du cercle formé par l'amincissement.

On doit veiller cependant à ce que l'amincissement ne soit pas masqué par la mousse, ce qui pourrait empêcher l'amincissement de se déchirer en cas de surpression à l'intérieur du générateur.

Il est également envisageable, comme illustré à la Figure 4, de disposer la mousse (10) dans la partie haute du conteneur (4), c'est-à-dire la partie comprise entre la mi-hauteur du conteneur et l'extrémité du conteneur qui n'est pas en contact avec le coffre. Il s'agit en général de l'extrémité (6) supportant les bornes de sortie (7, 8) de courant. Il est aussi envisageable de disposer la mousse à la fois sur la partie haute et la partie basse du conteneur. Il est aussi possible de recouvrir la paroi latérale du conteneur de mousse sans que la mousse n'atteigne les extrémités haute et basse du conteneur.

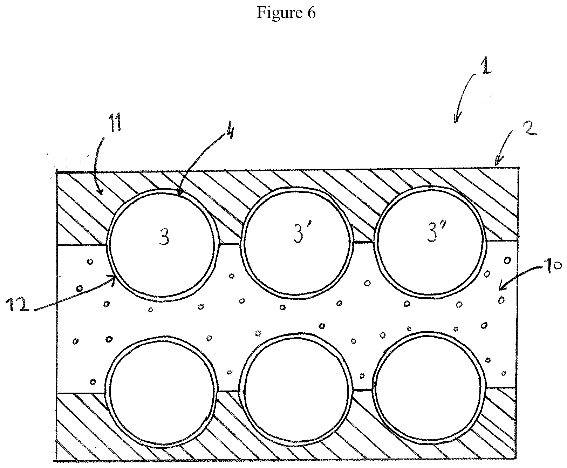

Dans un autre mode de réalisation de l'invention illustré à la Figure 6, une portion de la paroi latérale (12) des conteneurs est recouverte de mousse ignifugée rigide (10) à porosité fermée constituée d'un matériau isolant électrique, tandis que la portion non recouverte de mousse est en contact avec la paroi interne du coffre (11). La surface libre du conteneur de chacun des générateurs représente dans cet exemple environ 50% de la surface totale de la paroi latérale du conteneur. La paroi interne du coffre épouse la forme des conteneurs. Le coffre est de préférence en matière plastique. Il peut être fabriqué par moulage ce qui permet de modifier la forme de la paroi interne en fonction du format des conteneurs. Par exemple, les conteneurs (4) illustrés Figure 6 sont de forme cylindrique et la paroi interne du coffre comporte des évidements en forme de demi tubes destinés à venir en coïncidence avec la paroi latérale cylindrique du conteneur de chacun des générateurs. D'une part, la présence de mousse entre deux générateurs voisins permet d'isoler l'un des générateurs par rapport à l'autre. En cas de défaillance de l'un des générateurs, les gaz ne se propagent pas au générateur voisin. D'autre part, la paroi interne du coffre épousant la forme des conteneurs permet de fixer la position de chaque générateur et de l'immobiliser dans le coffre. Dans l'exemple de la figure 6, la mousse recouvre environ 50% de la surface libre de la paroi latérale du conteneur, mais d'autres pourcentages de recouvrement sont possibles tels que de 25% à 75%, de 40% à 60%, ou encore de 45% à 55% de la surface totale de la paroi latérale du conteneur.

Des essais de surcharge d'un des générateurs ont montré que lorsque l'on remplit l'espace inter-générateurs de mousse, la température des générateurs voisins du générateur défaillant n'atteint pas une valeur critique pour la propagation de l'emballement thermique alors que la température du générateur défaillant dont le système de sécurité s'est ouvert sous l'effet de la pression des gaz, atteint environ 650°C. Les générateurs lithium-ion voisins du générateur défaillant n'ont pas subi d'endommagement dû à une élévation de leur température. Cette absence de propagation du phénomène d'emballement thermique a été obtenue grâce au maintien des caractéristiques de la mousse c'est-à-dire le maintien de la porosité fermée, de la rigidité et de l'étanchéité.

Un coffre de batterie conventionnel contient des volumes d'air (vide) qui varient selon la pression extérieure. Pour les applications aéronautiques, les variations de pressions génèrent des gonflements et dégonflements du coffre. Dans l'invention, le fait de remplir des volumes d'air par de la mousse rigide non sujette aux variations de pression, annule ces phénomènes de gonflement/dégonflement, limite la fatigue du coffre et évite l'intégration d'évents.

Pour remplir de mousse les espaces libres, on peut :
a) soit utiliser une mousse qui par expansion vient combler les espaces libres,
b) soit utiliser un bloc de mousse usiné ou préalablement moulé que l'on vient insérer dans le coffre au moment du montage.

L'utilisation d'une mousse expansible dans la batterie facilite son remplissage par rapport à une résine, qui s'écoule uniquement par gravité, qui crée des bulles et cause des problèmes de remplissage. L'utilisation d'une mousse expansible facilite son remplissage car la pression de gonflement repousse la mousse dans toutes les cavités et anfractuosités de la géométrie à remplir. Par ailleurs, cette méthode permet de combler toutes les géométries, ce que ne permet pas la méthode des blocs préfabriqués.

On peut utiliser comme matériau de mousse le polyuréthane, l'époxy, le polyéthylène, les silicones, la mélamine, le polyester, le formophénol et le polystyrène, ou un mélange de ceux-ci, le polyuréthane et le mélange de polyuréthane et d'époxy étant préférés. De préférence, la conductivité thermique de la mousse varie entre 0,02 et 1 W/mK.

La formation d'une mousse plastique rigide de polyuréthane va maintenant être décrite. Un polyuréthane est produit par réaction d'un diisocyanate sur un composé donneur d'hydrogène. On peut citer comme composés donneurs d'hydrogène l'eau, les alcools, les amines et les urées. On pourra se référer aux pages 113-122 de l'édition 2002 de l'ouvrage intitulé « The polyurethanes book » publié par John Wiley and Sons.

L'expansion de la résine de polyuréthane pour former une mousse nécessite l'emploi d'un agent moussant. Différentes voies permettent d'obtenir la mousse:
a) par voie chimique, c'est-à-dire réaction d'eau sur l'isocyanate produisant du CO₂, qui fera mousser le polyuréthane ;
b) par voie physique, c'est-à-dire vaporisation d'un liquide à bas point d'ébullition, sous l'action de la chaleur produite par la réaction exothermique entre l'isocyanate et le composé donneur d'hydrogène ;
c) par injection d'air.

La voie physique est préférée pour la préparation de mousses rigides. Les hydrochlorofluorocarbures (HCFC), les hydrofluorocarbures (HFC) et les hydrocarbures (HC) peuvent être utilisés comme agents moussants. Ils sont considérés comme des alternatives aux composés chlorofluorocarbonés (CFC) suspectés de contribuer à l'appauvrissement de la couche d'ozone stratosphérique. On peut citer dans le groupe des hydrochlorofluorocarbures (HCFC) les composés suivants : CHClF₂ (HCFC-22), CH₃CClF₂ (HCFC-142b), CH₃CCl₂F (HCFC-141b) et CH₃CH₂ClCH₃ (2-chloropropane). On peut citer dans le groupe des hydrofluorocarbures (HFC) les composés suivants : CH₂FCF₃ (HFC-134a), CHF₂CH₃ (HFC-152a), CH₃CH₂CHF₂ (HFC-245fa) et CH₃CH₂CF₂CH₃ (HFC-365 mfc). On peut citer dans le groupe des hydrocarbures (HC) les composés suivants : l'iso-butane C₄H₁₀, l'iso-pentane C₅H_{12'} le n-pentane CH₃CH₂CHF₂ et le cyclo-pentane (CH₂)₅. L'utilisation d'hydrocarbures nécessite des précautions particulières en raison de leur inflammabilité élevée. On pourra se référer aux pages 131-134 de l'édition 2002 de l'ouvrage intitulé « The polyurethanes book » publié par John Wiley and Sons.

La mousse de polyuréthane rigide peut être préparée en mélangeant du méthylène diphenyl diisocyanate (MDI) ou du toluène diisocyananate (TDI) avec un polyol, un agent moussant parmi ceux cités ci-dessus, un agent ignifugeant éventuellement un catalyseur et de l'eau. Un agent de réticulation tel que la triéthanolamine ou la glycérine peut être utilisé pour améliorer la rigidité de la mousse.

La plupart des mousses rigides de polyuréthane sont caractérisées par des alvéoles de type fermé (porosité fermée). Le pourcentage d'alvéoles fermées est généralement compris entre 90 et 95%. On peut obtenir des alvéoles de type fermé lorsque la paroi des alvéoles reste intacte au cours de l'étape de formation de la mousse. La paroi n'est pas détruite par la pression des gaz en expansion dans l'alvéole. L'augmentation de température dans le mélange réactionnel joue un rôle déterminant dans l'augmentation de la pression interne de l'alvéole. L'expansion de la résine par voie physique telle que décrite ci-avant permet de refroidir le mélange réactionnel par évaporation du liquide à bas point d'ébullition. L'augmentation de pression se produit donc à un moment où la paroi des alvéoles est devenue rigide. L'utilisation de la voie chimique conduit à une température plus élevée du mélange réactionnel. Une augmentation rapide de température et de pression qui peut conduire à une destruction de la paroi des alvéoles. La formation de mousse rigide de polyuréthane est décrite de manière plus détaillée aux pages 248-251 de la seconde édition de l'ouvrage intitulé « Polyurethane Handbook » publié par Hanser Gardner.

L'agent ignifugeant incorporé à la mousse a pour rôle de réduire la quantité de flammes et de produits de combustion. Il possède une chaleur latente de transformation élevée. Il peut être choisi dans le groupe comprenant le phosphate de trichloropropyle (TCPP), le phosphate de triéthyle (TEP), le phosphate de diéthyle éthyle (DEPP), le phosphonate de diéthyle bis (2-hydroxyéthyl) amino méthyle, l'anhydride phtallique bromé, le dibromonéopentyl glycol, les polyéther polyol bromés, la mélamine, l'aluminium trihydraté, le polyphosphate d'ammonium et le phosphore rouge encapsulé. Un agent ignifugeant préféré est le phosphate de trichloropropyle (TCPP) car il contient une quantité importante de phosphore et de chlore. Il se présente sous la forme d'un liquide faiblement visqueux. Il est donc facile d'emploi. Le poly ether polyol bromé et l'anhydride phtallique bromé contiennent une quantité importante de brome. Le phosphate de triéthyle (TEP) et le phosphate de diéthyle éthyle (DEEP) sont préférés lorsque l'utilisation d'halogènes est interdite. L'agent ignifugeant représente en général de 3 à 10 pourcent de la mousse plastique.

La mousse ignifugée rigide peut aussi contenir des charges telles que l'aluminium trihydraté, le carbonate de calcium, le sulfate de barium, les fibres de verre, les fibres de carbone, la mélamine, le noir de carbone, l'oxyde de silicium.

On pourra se référer aux pages 160-162 de l'édition 2002 de l'ouvrage intitulé « The polyurethanes book » publié par John Wiley and Sons, LTD ainsi qu'aux pages 111-113 de la seconde édition de l'ouvrage intitulé « Polyurethane Handbook » publié par Hanser Gardner Publications pour davantage de précisions sur les agents ignifugeants et les charges.

L'invention peut aussi être mise en oeuvre en utilisant une mousse époxy fabriquée à partir d'une résine époxy. La résine époxy peut être obtenue en mélangeant de l'épichlorohydrine à du bisphénol A. L'agent moussant peut être de l'air ou un composé à faible température d'ébullition, par exemple le pentane. L'agent moussant est ajouté en une quantité comprise entre 5 et 30% du poids de la résine époxy. On peut également utiliser des composés tels que le bicarbonate de sodium et le carbonate de calcium qui en présence d'acide libèrent du dioxyde de carbone.

L'invention peut aussi être mise en oeuvre en utilisant une mousse de polystyrène. On peut utiliser comme agent moussant le butane, le pentane, l'hexane et l'heptane. On peut aussi utiliser comme agent de l'air, du dioxyde de carbone, de l'azote, de l'hélium du méthane, de l'argon et le néon. Le polystyrène est dissous par certains hydrocarbures aromatiques, tels que le benzène, le toluène, le xylène et l'éthylbenzène, et par certains hydrocarbures aliphatiques chlorés tels que le chlorure de méthylène, le chloroforme et le tétrachlorure de carbone. Ces composés ne peuvent donc pas être utilisés comme agents moussants.

Selon un mode de réalisation de l'invention, est disposé dans le coffre, au moins un joint en élastomère 15 maintenu par exemple à l'aide d'un adhésif contre la surface d'un flasque 16, lequel est en contact avec le fond du conteneur des générateurs ou avec le couvercle des générateurs.

Le flasque est un gabarit qui aide à maintenir en place la pluralité de générateurs électrochimiques par la présence d'évidements 76. Ces évidements s'emboitent avec (ou sont adaptés à recevoir) une portion de la surface du conteneur telle que le fond du conteneur ou un couvercle servant à obturer le conteneur. Les évidements ont été pratiqués pour épouser soit la forme du couvercle du conteneur soit la forme du fond du conteneur.

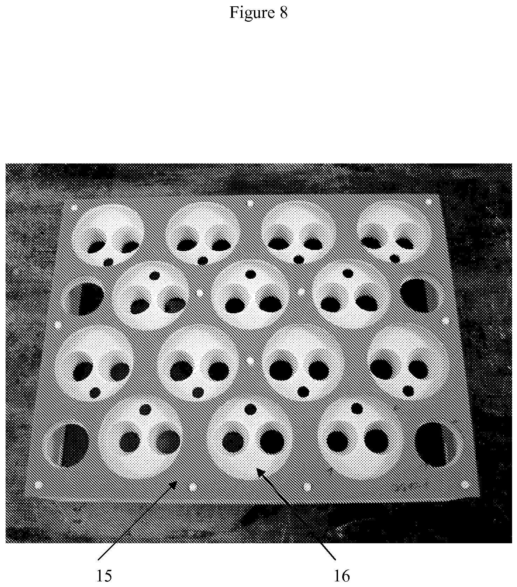

Le joint en élastomère présente une pluralité d'ouvertures 75 dont le bord coïncide avec la limite d'un évidement (Figure 8). De préférence, la surface de l'ouverture est inférieure à la surface définie par la limite de l'évidement pour permettre une bonne étanchéité entre le conteneur et le joint en élastomère. Le joint en élastomère, de par sa forte capacité de déformation, permet de combler les jeux éventuels à l'intérieur d'un assemblage mécanique. L'assemblage comprenant les différents éléments constitue un volume fermé dans lequel est injectée la mousse.

L'entretoise 73 est un élément permettant de combler l'espace vide entre les générateurs électrochimiques. Il permet de renforcer la rigidité de la batterie.

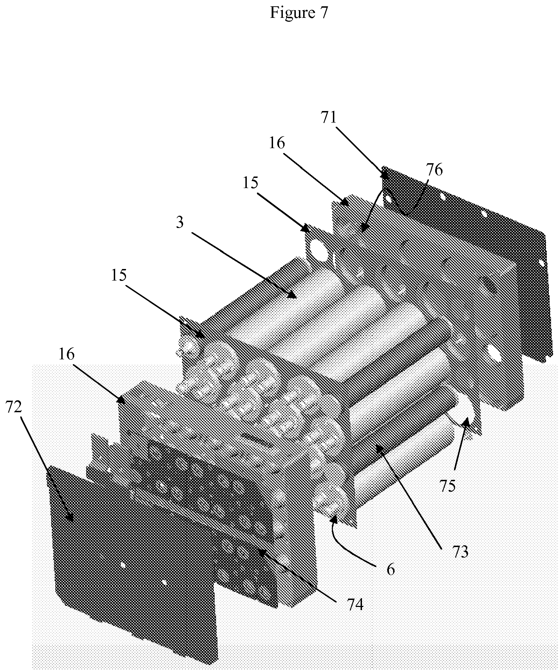

Un pack (figure 7) est constitué par l'assemblage :
- de la pluralité de générateurs électrochimiques,
- des éléments de maintien de la pluralité de générateurs électrochimiques dans le coffre (flasques, joints en élastomère, entretoises),
- des éléments d'isolation électrique et thermique (carton pare feu, plaque isolante),
- des éléments de connexions électriques (connexions de puissance et connexions pour la gestion des paramètres de fonctionnement de la batterie).

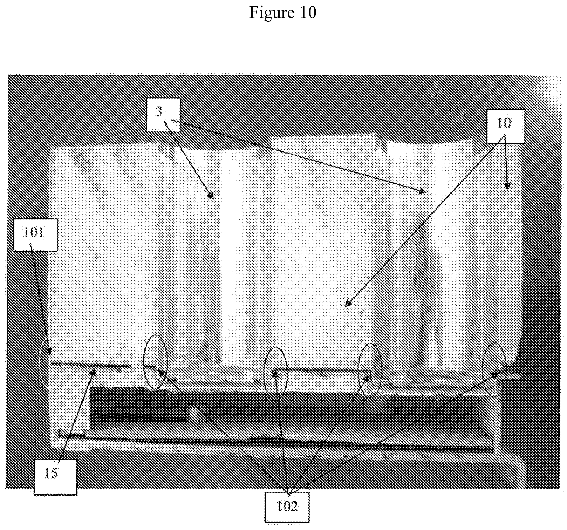

L'insertion par contact des générateurs électrochimiques dans les flasques au travers de joints en élastomère permet d'avoir un contact annulaire sur toute la surface des générateurs électrochimiques. Ainsi, les jeux éventuels entre le générateur et le flasque sont limités, comme illustré par les zones d'étanchéité 102 de la Figure 10. On obtient un ensemble hermétique grâce à la mise en place d'un joint en élastomère et d'un flasque à l'extrémité de chaque générateur électrochimique.

De plus, le joint en élastomère fixé sur un flasque génère une lèvre débordante du flasque qui entre en contact avec le coffre et garantit l'absence de jeu, illustré par la zone d'étanchéité 101 de la Figure 10, entre le pack et le coffre, ce jeu étant susceptible de générer des fuites de mousse (les dimensions (longueur et largeur) du joint sont supérieures de quelques millimètres à celles du flasque).

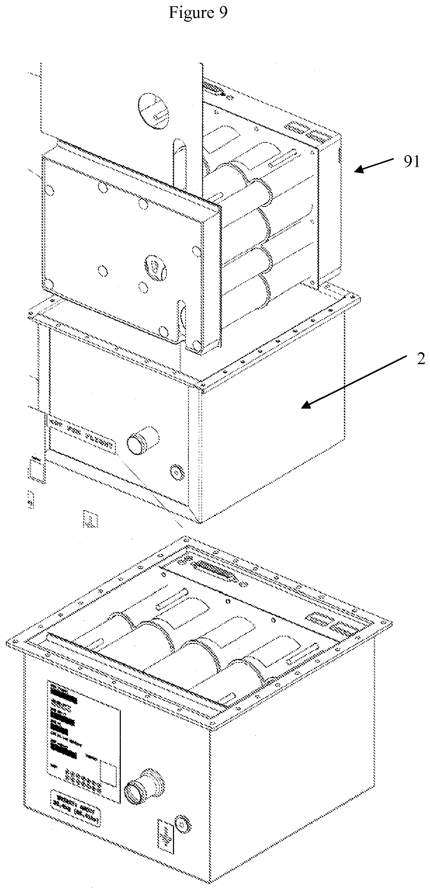

Ce mode de réalisation autorise entre autre l'assemblage hermétique des générateurs électrochimiques de format cylindrique et parallélépipédique. La figure 9 est un schéma représentant la mise en place du pack 91 dans le coffre 2.

L'utilisation conjointe d'un flasque et d'un joint en élastomère permet de réduire les risques de fuite de mousse. En effet, les méthodes connues actuellement pour introduire la mousse provoquent des fuites de mousse pendant l'injection et l'assemblage de la batterie de générateurs. La variabilité liée à la quantité de mousse injectée et la température à laquelle celle-ci est injectée influent sur le taux de fuite. On observe donc des fuites plus ou moins importantes. Ces fuites provoquent un effort sur les connexions de puissance, qui dégrade les résistances de contact entre les éléments électrochimiques et les connexions de puissance, voire dégrade les composants électroniques des cartes disposées dans le volume connectique. Ces fuites provoquent également l'obstruction des dispositifs de sécurité servant à contrôler l'augmentation de la pression interne du générateur électrochimique. Ces dispositifs peuvent être par exemple constitués par une soupape, par un amincissement ou par une zone de fragilisation de la paroi du conteneur du générateur électrochimique. Les performances de la batterie sont dégradées suite à ces phénomènes de fuite. De plus, ces fuites de mousse réduisent la quantité de mousse qui devrait être présente dans le volume dédié. Par conséquent, une fois la mousse expansée, celle-ci présente un volume réduit par rapport au volume attendu, ce qui impose une réinjection de mousse après montage de la batterie.

Les générateurs utilisés sont du type au lithium, de préférence de type lithium-ion. Des générateurs de type lithium polymère ou des générateurs au lithium à cathode liquide tels que Li/SO₂, Li/SOCl₂, Li/MnO₂ Li/CFₓ, Li/MnO₂+CFₓ ou LiSO₂Cl₂ peuvent aussi être utilisés.

Outre son aptitude à limiter le risque de propagation de l'emballement thermique dans le cas de générateurs de type lithium-ion de forte puissance, la batterie selon l'invention présente les avantages suivants :
- elle permet un excellent maintien mécanique, même en température élevée, des générateurs en raison de la rigidité de la mousse ; la mousse de remplissage adhère très fortement à tous les constituants de la batterie et la rigidifie. Les déplacements relatifs des générateurs sont donc limités. Cet avantage est déterminant pour la qualification de la batterie selon les normes de vibration, de choc et impact.
- elle permet d'éviter le contact entre les conteneurs de deux générateurs voisins en cas de déformation du conteneur d'un des générateurs. Les risques de court-circuit sont donc réduits. Par exemple, dans le domaine des télécommunications, une batterie de 80Ah présente une bonne résistance aux chocs. Des générateurs ont été calés avec de la mousse polyuréthane pour faire une batterie de 30Kg. La batterie a subi une chute d'une hauteur de 5 m. Les générateurs protégés par la mousse sont restés intègres et tout contact entre les générateurs a été évité.
- elle présente une meilleure résistance aux variations de pression externes à la batterie. La batterie selon l'invention permet pendant les vols en altitude de limiter la fatigue des coffres par cyclage gonflement-dégonflement. Le remplissage des corps creux de la batterie par une mousse supprime cette contrainte.
- elle permet l'augmentation de la fréquence de résonance et de limiter par conséquent les forts déplacements dans les gammes de fréquences faibles, Par exemple le fonctionnement d'une batterie de 50Ah dans le domaine de l'aéronautique est peu perturbé par des fréquences de vibration situées dans la gamme allant de 0 à 100 Hz. La recherche de la fréquence de résonance a montré que la batterie sans mousse avait une fréquence de résonance relativement basse (70Hz), alors que la batterie possédant une mousse avait une fréquence bien plus élevée (120Hz). Cette augmentation de fréquence de résonance place la batterie dans une gamme de fréquence plus élevée et s'affranchit donc de bon nombre de spectres vibratoires pour lesquels la partie [0Hz-100Hz] comprend de fortes accélérations et de forts déplacements.
- elle permet de réaliser une herméticité suffisante pour garantir le maintien de la mousse dans son volume dédié. Il n'est pas nécessaire d'ajouter de la mousse complémentaire lors de l'étape de montage. Les fuites n'ont ainsi plus lieu, garantissant une conservation des performances de la batterie et de la sécurité lors du fonctionnement de la batterie.

## Revendications

1. Batterie (1) de générateurs électrochimiques au lithium comprenant :
- un coffre (2) ;
- une pluralité de générateurs électrochimiques au lithium (3, 3', 3") logés dans le coffre, chaque générateur comprenant un conteneur (4) et au moins un générateur électrochimique comprenant un conteneur présentant une extrémité obturée par une paroi (14) présentant un amincissement (13, 13', 13") adapté à être déchiré par une surpression à l'intérieur du conteneur, le conteneur étant de forme cylindrique et l'amincissement présentant une forme circulaire;
- une mousse ignifugée rigide (10) à porosité fermée constituée d'un matériau isolant électrique remplissant l'espace entre la paroi interne du coffre (11) et la surface libre de la paroi latérale (12) du conteneur de chaque générateur électrochimique, ladite mousse recouvrant la surface libre de la paroi latérale du conteneur de chaque générateur électrochimique sur une longueur représentant au moins 25% de la hauteur du conteneur, ladite mousse recouvrant l'extrémité obturée sur une surface située à l'extérieur de la forme circulaire, l'amincissement n'étant pas masqué par la mousse, ladite mousse conservant sa porosité fermée ainsi que sa structure rigide et étanche, même en cas de forte augmentation de sa température due à un feu et/ou à des gaz chauds, les gaz chauds s'échappant dans un volume délimité par le fond du conteneur, le fond du coffre et la mousse.

2. Batterie selon la revendication 1, dans laquelle la surface libre de la paroi latérale du conteneur de chaque générateur électrochimique représente la totalité de la surface de la paroi latérale du conteneur.

3. Batterie selon la revendication 1, dans laquelle la surface libre de la paroi latérale du conteneur de chaque générateur électrochimique représente de 25% à 75%, de préférence de 40% à 60%, de préférence encore de 45% à 55% de la surface de la paroi latérale du conteneur.

4. Batterie selon la revendication 1, dans laquelle le coffre comprend une paroi interne épousant la forme de la paroi latérale d'au moins un conteneur, la paroi interne du coffre étant en contact avec ladite paroi latérale dudit conteneur.

5. Batterie selon l'une des revendications précédentes, dans laquelle la mousse recouvre la surface libre de la paroi latérale (12) du conteneur de chaque générateur sur une longueur représentant au moins 50% de la hauteur du conteneur, de préférence encore au moins 75% de la hauteur du conteneur et de manière particulièrement préférée toute la hauteur du conteneur.

6. Batterie selon l'une des revendications 1 à 4, dans laquelle le conteneur est de forme cylindrique et la mousse recouvre la surface libre de la paroi latérale du conteneur uniquement sur une partie comprise entre la mi-hauteur du conteneur et l'extrémité du conteneur reposant sur le coffre.

7. Batterie selon l'une des revendications 1 à 4, dans laquelle le conteneur est de forme cylindrique et la mousse recouvre la surface libre de la paroi latérale du conteneur uniquement sur une partie comprise entre la mi-hauteur du conteneur et l'extrémité du conteneur ne reposant pas sur le coffre.

8. Batterie selon l'une des revendications précédentes, dans laquelle les générateurs électrochimiques ont une capacité supérieure à 5 Ah.

9. Batterie selon l'une des revendications précédentes dans laquelle au moins un générateur est de type lithium-ion.

10. Batterie selon l'une des revendications précédentes, dans laquelle le matériau isolant électrique est une matière plastique.

11. Batterie selon l'une des revendications 1 à 9, dans laquelle la mousse est constituée d'un matériau choisi dans le groupe comprenant le polyuréthane, l'époxy, le polyéthylène, la mélamine, le polyester, le formophénol, le polystyrène, la silicone ou d'un mélange de ceux-ci.

12. Batterie selon l'une des revendications précédentes, dans laquelle la conductivité thermique de la mousse varie entre 0,02 et 0,2 W/mK.

13. Batterie selon l'une des revendications précédentes dans laquelle la mousse comprend un composé ignifugeant choisi dans le groupe comprenant le phosphate de trichloropropyle (TCPP), le phosphate de triéthyle (TEP), le phosphate de diéthyle éthyle (DEPP), un polyether polyol bromé, l'anhydride phtallique bromé, le polyphosphate d'ammonium, le phosphore rouge encapsulé, ou un mélange de ceux-ci.

14. Batterie selon l'une des revendications précédentes dans laquelle la mousse comprend des charges choisies dans le groupe comprenant l'aluminium trihydraté, le carbonate de calcium, le sulfate de baryum, les fibres de verre, les fibres de carbone, la mélamine, le noir de carbone, l'oxyde de silicium, ou un mélange de ceux-ci.

15. Batterie selon l'une des revendications précédentes dans laquelle la densité de la mousse varie entre 5 et 800 kg/m³.

16. Batterie selon l'une des revendications précédentes dans laquelle sont disposés dans le coffre (2):
- au moins un flasque (16) comprenant une pluralité d'évidements (76) aptes à s'emboiter avec une portion du conteneur de chacun des générateurs et/ou avec un couvercle (6) obturant le conteneur de chacun des générateurs,
- au moins un joint en élastomère (15) disposé sur ledit flasque, lequel joint comprend une pluralité d'ouvertures (75) en coïncidence avec les évidements du flasque.

17. Batterie selon la revendication 16, dans laquelle un premier flasque s'emboite avec une portion du conteneur de chacun des générateurs et un second flasque s'emboite avec le couvercle de chacun des générateurs.

## Patentansprüche

1. Batterie (1) von elektrochemischen Lithiumgeneratoren, umfassend:
- ein Gehäuse (2);
- eine Vielzahl von, im Gehäuse angeordneten, elektrochemischen Lithiumgeneratoren (3, 3', 3"), wobei jeder Generator einen Behälter (4) umfasst, und mindestens einer der elektrochemischen Generatoren einen Behälter, umfasst, dessen eines Ende durch eine Wand (14) abgedichtet ist, die eine Verdünnung (13, 13' 13") aufweist, die ausgelegt ist, um durch einen Überdruck im Inneren des Behälters zu zerreißen, wobei der Behälter von zylindrischer Form ist und die Verdünnung eine kreisförmige Form aufweist;
- einen, aus einem elektrisch isolierendem Material bestehenden, flammhemmenden Hartschaumstoff (10) mit geschlossener Porosität, der den Raum zwischen der Innenwand des Gehäuses (11) und die freie Oberfläche der Seitenwand (12) des Behälters eines jeden elektrochemischen Generators ausfüllt, wobei der Schaumstoff die freie Oberfläche der Seitenwand des Behälters eines jeden elektrochemischen Generators über eine Länge hin abdeckt, die mindestens 25% der Höhe des Behälters darstellt, wobei der Schaumstoff das abgedichtete Ende auf einer, außerhalb der kreisförmigen Form liegenden Oberfläche abdeckt, wobei die Verdünnung durch den Schaumstoff nicht verdeckt wird, und wobei der Schaumstoff seine geschlossene Porosität wie auch seine starre und abgedichtete Struktur beibehält, auch im Falle einer starken Erhöhung seiner Temperatur durch ein Feuer und/oder heiße Gase, wobei die Gase in einem, durch den Boden des Behälters, den Boden des Gehäuses und den Schaumstoff begrenzten Volumen entweichen.

2. Batterie nach Anspruch 1, wobei die freie Oberfläche der Seitenwand des Behälters eines jeden elektrochemischen Generators die Gesamtheit der Oberfläche der Seitenwand des Behälters darstellt.

3. Batterie nach Anspruch 1, wobei die freie Oberfläche der Seitenwand des Behälters eines jeden elektrochemischen Generators 25% bis 75%, vorzugsweise 40% bis 60%, noch bevorzugter 45% bis 55% der Oberfläche der Seitenwand des Behälters darstellt.

4. Batterie nach Anspruch 1, wobei das Gehäuse eine Innenwand umfasst, welche die Form der Seitenwand mindestens eines Behälters annimmt, wobei die Innenwand des Gehäuses mit der Seitenwand des Behälters in Kontakt steht.

5. Batterie nach einem der vorhergehenden Ansprüche, wobei der Schaumstoff die freie Oberfläche (12) des Behälters eines jeden Generators über eine Länge hin abdeckt, die mindestens 50% der Höhe des Behälters, vorzugsweise 75% die Höhe des Behälters und besonders bevorzugt die gesamte Höhe des Behälters darstellt.

6. Batterie nach einem der Ansprüche 1 bis 4, wobei der Behälter von zylindrischer Form ist und der Schaumstoff die freie Oberfläche der Seitenwand des Behälters ausschließlich auf einem, zwischen halber Höhe des Behälters und am Ende des auf dem Gehäuse ruhenden Behälters liegenden Teil abdeckt.

7. Batterie nach einem der Ansprüche 1 bis 4, wobei der Behälter von zylindrischer Form ist und der Schaumstoff die freie Oberfläche der Seitenwand des Behälters ausschließlich auf einem, zwischen halber Höhe des Behälters und am Ende des nicht auf dem Gehäuse ruhenden Behälters liegenden Teil abdeckt.

8. Batterie nach einem der vorhergehenden Ansprüche, wobei die elektrochemischen Generatoren eine Kapazität von über 5 Ah aufweisen.

9. Batterie nach einem der vorhergehenden Ansprüche, wobei mindestens ein Generator vom Lithium-Ionen-Typ ist.

10. Batterie nach einem der vorhergehenden Ansprüche, wobei das elektrisch isolierende Material ein Kunststoff ist.

11. Batterie nach einem der Ansprüche 1 bis 9, wobei der Schaumstoff aus einem Material besteht, das ausgewählt ist aus der Gruppe umfassend Polyurethan, Epoxid, Polyethylen, Melamin, Polyester, Formophenol, Polystyrol, Silikon oder einem Gemisch davon.

12. Batterie nach einem der vorhergehenden Ansprüche, wobei die Wärmeleitfähigkeit des Schaumstoffs zwischen 0,02 und 2,2 W/mK variiert.

13. Batterie nach einem der vorhergehenden Ansprüche, wobei der Schaumstoff eine flammhemmende Komponente umfasst, die ausgewählt ist aus der Gruppe umfassend Trichlorpropylphosphat (TCPP), Triethylphosphat (TEP), Diethylethylphosphat (DEPP), bromiertes Polyetherpolyol, Ammoniumpolyphosphat, eingekapselten roten Phosphor oder ein Gemisch davon.

14. Batterie nach einem der vorhergehenden Ansprüche, wobei der Schaumstoff Füllstoffe umfasst, die ausgewählt sind aus der Gruppe umfassend Aluminiumtrihydrat, Calciumcarbonat, Bariumsulfat, Glasfasern, Kohlenstoffasern, Ruß, Siliziumoxid oder ein Gemisch davon.

15. Batterie nach einem der vorhergehenden Ansprüche, wobei die Dichte des Schaumstoffs im Bereich von 5 bis 800 kg/m³ liegt.

16. Batterie nach einem der vorhergehenden Ansprüche, wobei im Gehäuse (2) Folgendes angeordnet ist:
- mindestens ein Flansch (16), umfassend eine Vielzahl von Auspaarungen (76), die ausgelegt sind, um mit einem Abschnitt des Behälters eines jeden Generators und/oder mit einem, den Behälter eines jeden Generators verschließenden Deckel (6) ineinanderzugreifen,
- mindestens eine, an der Flansch angeordnete Elastomerdichtung (15), wobei die Dichtung eine Vielzahl von Öffnungen (75) aufweist, die mit den Auspaarungen des Flansches übereinstimmen

17. Batterie nach Anspruch 16, wobei ein erster Flansch mit einem Abschnitt des Behälters eines jeden Generators ineinandergreift, und ein zweiter Flansch mit dem Deckel eines jeden Generators ineinandergreift.

## Claims

1. Battery (1) of lithium electrochemical cells comprising:
- a casing (2);
- a plurality of lithium electrochemical cells (3, 3', 3") housed in the casing, each cell comprising a container (4) and at least one electrochemical cell comprising a container having an end closed by a wall (14) having a thinning (13, 13', 13") adapted to be ruptured by an overpressure inside the container, the container being of cylindrical shape and the thinning having a circular shape;
- a rigid, flame-retardant foam (10) with closed porosity formed of an electrically insulating material filling the space between the inner wall of the casing (11) and the free surface of the side wall (12) of the container of each electrochemical cell, said foam covering the free surface of the side wall of the container of each electrochemical cell over a length representing at least 25 % of the height of the container, said foam covering the closed end on a surface located outside the circular shape, the thinning not being masked by the foam, said foam retaining its closed porosity as well as its rigid and watertight structure, even in case of a sharp increase in its temperature due to a fire and/or hot gases, the hot gases escaping in a volume delimited by the bottom container, the bottom of the casing and the foam.

2. The battery according to claim 1, wherein the free surface of the side wall of the container of each electrochemical cell represents the entirety of the surface of the side wall of the container.

3. The battery according to claim 1, wherein the free surface of the side wall of the container of each electrochemical cell represents from 25 % to 75 %, preferably 40 % to 60 %, more preferably 45 % to 55 % of the surface of the side wall of the container.

4. The battery according to claim 1, wherein the casing comprises an inner wall following the contour of the side wall of at least one container, the inner wall of the casing being in contact with said side wall of said container.

5. The battery according to any of the preceding claims, wherein the foam covers the free surface of the side wall (12) of the container of each cell over a length representing at least 50 % of the height of the container, more preferably at least 75 % of the height of the container and further preferably the entire height of the container.

6. The battery according to any of claims 1 to 4, wherein the container is of cylindrical shape and the foam covers the free surface of the side wall of the container solely on a part lying between the mid-height of the container and the end of the container resting on the casing.

7. The battery according to any of claims 1 to 4, wherein the container is of cylindrical shape and the foam covers the free surface of the side wall of the container solely on a part lying between the mid-height of the container and the end of the container not resting on the casing.

8. The battery according to any of the preceding claims, wherein the electrochemical cells have a capacity of more than 5 Ah.

9. The battery according to any of the preceding claims, wherein at least one cell is of lithium-ion type.

10. The battery according to any of the preceding claims, wherein the electric insulating material is a plastic material.

11. The battery according to any of claims 1 to 9, wherein the foam is formed of a material chosen from the group comprising polyurethane, epoxy, polyethylene, melamine, polyester, formophenol, polystyrene, silicone or a mixture thereof.

12. The battery according to any of the preceding claims, wherein the thermal conductivity of the foam varies between 0.02 and 0.2 W/mK.

13. The battery according to any of the preceding claims, wherein the foam comprises a flame-retardant compound chosen from the group comprising trichloropropyl phosphate (TCPP), triethyl phosphate (TEP), diethyl ethyl phosphate (DEEP), a brominated polyether polyol, brominated phthalic anhydride, ammonium polyphosphate, encapsulated red phosphorus, or a mixture thereof.

14. The battery according to any of the preceding claims, wherein the foam comprises fillers chosen from the group comprising trihydrated aluminium, calcium carbonate, barium sulphate, glass fibres, carbon fibres, melamine, carbon black, silicon oxide, or a mixture thereof.

15. The battery according to any of the preceding claims, wherein the density of the foam varies between 5 and 800 kg/m³.

16. The battery according to any of the preceding claims, wherein the following are arranged in the casing (2):
- at least one flange (16) comprising a plurality of cut-outs (76) capable of interlocking with a portion of the container of each of the cells and/or with a lid (6) closing the container of each of the cells,
- at least one elastomer seal (15) arranged on said flange, said seal comprises a plurality of openings (75) coinciding with the cut-outs of the flange.

17. The battery according to claim 16, wherein a first flange interlocks with a portion of the container of each of the cells and a second flange interlocks with the lid of each of the cells.
